# EUROPÄISCHE PATENTSCHRIFT

(11) **EP 3 532 711 B1**
(45) Veröffentlichungstag und Bekanntmachung des Hinweises auf die Patenterteilung: **17.03.2021**
(21) Anmeldenummer: 17791563.4
(22) Anmeldetag: 18.10.2017
(51) Int. Cl.: F01L 1/352

(54) **VERSTELLGETRIEBEANORDNUNG FÜR EIN FAHRZEUG, FAHRZEUG MIT DER VERSTELLGETRIEBEANORDNUNG SOWIE VERFAHREN ZUR MONTAGE DER VERSTELLGETRIEBEANORDNUNG**
VARIABLE-SPEED GEAR ARRANGEMENT FOR A VEHICLE, VEHICLE COMPRISING THE VARIABLE-SPEED GEAR ARRANGEMENT, AND METHOD FOR ASSEMBLING THE VARIABLE-SPEED GEAR ARRANGEMENT
ENSEMBLE MÉCANISME DE RÉGLAGE POUR UN VÉHICULE, VÉHICULE COMPRENANT L'ENSEMBLE MÉCANISME DE RÉGLAGE AINSI QUE PROCÉDÉ DE MONTAGE DE L'ENSEMBLE MÉCANISME DE RÉGLAGE

(30) Priorität: 25.10.2016 DE 102016220919
(43) Veröffentlichungstag der Anmeldung: 04.09.2019
(73) Patentinhaber: Schaeffler Technologies AG & Co. KG, 91074 Herzogenaurach (DE)
(72) Erfinder: ARAS, Resat, 90763 Fürth (DE)
(86) Internationale Anmeldenummer: PCT/DE2017/100895
(87) Internationale Veröffentlichungsnummer: WO 2018/077341

(56) Entgegenhaltungen:
- DE-A1-102014 213 597
- JP-A- H0 267 405
- US-A- 3 091 979
- US-A1- 2011 030 632
- US-A1- 2015 240 674

## Beschreibung

Die Erfindung betrifft eine Verstellgetriebeanordnung für ein Fahrzeug mit den Merkmalen des Oberbegriffs des Anspruchs 1. Ferner betrifft die Erfindung ein Verfahren zur Montage der Verstellgetriebeanordnung mit den Merkmalen des Anspruchs 10.

Nockenwellen werden zur Steuerung von Ventilen in Verbrennungsmotoren, zum Beispiel bei Kraftfahrzeugen verwendet. In einfachen Ausführungen sind die Nockenwelle und eine Kurbelwelle des Verbrennungsmotors in einer festen Phasenbeziehung. Allerdings gibt es auch Verbrennungsmotoren, bei denen die Phasenlage zwischen Kurbelwelle und Nockenwelle einstellbar ist, um beispielsweise bei unterschiedlichen Drehzahlen unterschiedliche Öffnungs- und Schließzeitpunkte für die Ventile einzustellen.

Als Aktorik für die stellbare Nockenwelle werden oftmals Wellgetriebe eingesetzt. Wellgetriebe sind Übersetzungs- oder Transmissionsgetriebe, welche aus drei Unterbaugruppen aufgebaut sind. Eine Wellgeneratoreinrichtung bildet oftmals einen Eingang oder einen Ausgang um das Wellgetriebe und weist eine ovale oder elliptische geformte und in radialer Richtung umlaufende Außenfläche auf. Diese greift in eine meist als Flexspline bezeichnete Komponente als zweite Unterbaugruppe ein, welche derart elastisch ausgebildet ist, dass diese durch die Wellgeneratoreinrichtung in radialer Richtung verformt werden kann. Auf der radialen Außenseite des Flexsplines ist eine Außenverzahnung angeordnet. Als dritte Unterbaugruppe weist das Wellgetriebe ein Hohlrad auf, welches eine Innenverzahnung trägt. Die Außenverzahnung des Flexspline greift üblicherweise an zwei gegenüberliegenden Positionen in die Innenverzahnung des Hohlrades ein. Durch eine Rotationsbewegung der Wellgeneratoreinrichtung werden die Eingangspositionen zwischen Außenverzahnung und Innenverzahnung in Umlaufrichtung bewegt. Durch eine unterschiedliche Anzahl von Zähnen zwischen der Außenverzahnung und der Innenverzahnung ergibt sich eine Relativbewegung zwischen dem Wellgenerator bzw. dem Hohlrad und dem Flexspline.

Die Druckschrift DE 10 2014 213 597 A1, die wohl den nächstkommenden Stand der Technik bildet, offenbart eine Vorrichtung zum Verstellen einer Nockenwelle für ein Fahrzeug. Die Vorrichtung weist ein Wellgetriebe mit einem Hohlrad auf, wobei das Hohlrad mit der Nockenwelle drehfest verbunden ist. Die drehfeste Verbindung erfolgt über eine koaxial geführte Schraube, wobei der Schraubenkopf an einer Seitenwand des Hohlrads anliegt und ein Gewinde der Schraube in die Nockenwelle eingeschraubt ist, sodass ein Klemmverband umgesetzt ist, welcher das Hohlrad mit der Nockenwelle verbindet.

Es ist Aufgabe der vorliegenden Erfindung, das Betriebsverhalten einer Verstellgetriebeanordnung zu verbessern.

Diese Aufgabe wird durch eine Verstellgetriebeanordnung mit den Merkmalen des Anspruchs 1, ein Fahrzeug mit dieser Verstellgetriebeanordnung mit dem Merkmal des Anspruchs 9, sowie ein Verfahren zur Montage Verstellgetriebeanordnung mit den Merkmalen des Anspruchs 10 gelöst. Bevorzugt oder vorteilhafte Ausführungsformen der Erfindung ergeben sich aus den Unteransprüchen der nachfolgenden Beschreibung sowie den beigefügten Figuren.

Gegenstand der Erfindung ist eine Verstellgetriebeanordnung, welche insbesondere für ein Fahrzeug geeignet und/oder ausgebildet ist. Die Verstellgetriebeanordnung weist eine Welle und eine Wellgetriebeeinrichtung auf. Insbesondere ist die Welle eine Nockenwelle, vorzugsweise eine Einlass- und/oder eine Auslassnockenwelle. Alternativ ist die Welle eine Kurbelwelle. Prinzipiell kann die Wellgetriebeeinrichtung als hydraulische Wellgetriebeeinrichtung ausgebildet sein. Besonders bevorzugt jedoch ist die Wellgetriebeeinrichtung als elektrische Wellgetriebeeinrichtung ausgebildet.

Die Wellgetriebeeinrichtung weist ein Abtriebsrad auf, wobei das Abtriebsrad, insbesondere mit seiner Rotationsachse und/oder Symmetrieachse, eine Hauptdrehachse definiert. Optional ergänzend weist das Abtriebsrad einen integrierten Anschlagabschnitt auf. Vorzugsweise sind das Abtriebsrad und der integrierte Anschlagabschnitt einteilig ausgebildet. Alternativ oder optional ergänzend weist die Wellgetriebeeinrichtung eine separate Anschlagscheibe auf. Insbesondere ist die Anschlagscheibe zwischen dem Abtriebsrad und der Welle angeordnet. Vorzugsweise hat das Abtriebsrad und optional die Anschlagscheibe die Funktion die Phasenlage der Welle zu verstellen, so dass Öffnungs- bzw. Schließzeiten der Ventile gesteuert werden.

Insbesondere weist die Wellgetriebeeinrichtung einen Wellgenerator und eine Stirnradeinrichtung auf. Der Wellgenerator bildet vorzugsweise einen Antrieb und weist einen ovalen, insbesondere elliptischen Grundkörper auf. Der Grundkörper ist um eine Hauptdrehachse des Wellgetriebes drehbar. Ferner kann der Wellgenerator eine Lagereinrichtung umfassen. Die Stirnradeinrichtung - oftmals auch als Flexspline bezeichnet - weist eine Außenverzahnung auf. Ferner weist die Stirnradeinrichtung eine radiale Innenseite, insbesondere einen Innenumfang auf, welcher zumindest bereichsweise an dem Außenumfang der Lagereinrichtung anliegt. Die Stirnradeinrichtung ist derart verformbar ausgebildet, dass diese durch den Wellgenerator insbesondere in eine ovale und/oder elliptische Form, insbesondere bestimmungsgemäß verformt werden kann.

Insbesondere ist das Abtriebsrad als ein Abtriebshohlrad ausgebildet. Die Stirnradeinrichtung steht mit dem Abtriebsrad in Eingriff und treibt das Abtriebsrad in Umlaufrichtung an, so dass eine Drehbewegung auf das Abtriebsrad übertragen wird. Besonders bevorzugt trägt das Abtriebsrad eine Innenverzahnung, wobei die Innenverzahnung nur und/oder ausschließlich bereichsweise mit der Außenverzahnung in Eingriff steht. Vorzugsweise stehen die Innenverzahnung und die Außenverzahnung in genau zwei Eingriffsbereichen miteinander in Eingriff und sind in dazwischen liegenden Zwischenbereichen voneinander getrennt und/oder stehen dort außer Eingriff.

Ferner weist die Wellgetriebeeinrichtung einen Außenrotor, insbesondere ein Kettenrad, auf, wobei das Abtriebsrad und ggf. die Anschlagscheibe relativ zu dem Außenrotor verdrehbar ist. Der Anschlagabschnitt oder optional die Anschlagscheibe dienen zur Begrenzung eines Drehwinkels, so dass eine Verdrehung des Abtriebsrads und ggf. der Anschlagscheibe und/oder des Außenrotors auf einen festgelegten Drehwinkel begrenzt ist.

Die Verstellgetriebeanordnung weist ein Befestigungsmittel auf, wobei die Welle durch das Befestigungsmittel optional mit der Anschlagscheibe und dem Abtriebsrad verbunden ist. Prinzipiell kann das Befestigungsmittel als Schraubmittel und/oder als ein Spannmittel ausgebildet sein. Beispielsweise ist das Befestigungsmittel eine Zylinderkopfschraube oder eine Sechskantschraube. Besonders bevorzugt jedoch ist das Befestigungsmittel eine Zentralschraube.

Das Befestigungsmittel presst die Welle, ggf. die Anschlagscheibe und das Abtriebsrad in axialer Richtung zusammen, sodass ein Klemmverband gebildet ist. Auf diese Weise ist es möglich, eine Rotations- und/oder Schwenkbewegung des Abtriebsrads und ggf. der Anschlagscheibe auf die Welle zu übertragen. Insbesondere ist der Klemmverband so ausgebildet, dass das Abtriebsrad und ggf. die Anschlagscheibe mit der Welle kraftschlüssig verbunden sind.

Insbesondere ist das Befestigungsmittel koaxial zu der Welle ausgerichtet, wobei zwischen einem Kopf des Befestigungsmittels und einem Endbereich des Befestigungsmittels das Antriebsrad, ggf. die Anschlagscheibe und die Welle angeordnet sind und durch das Befestigungsmittel zusammengepresst werden, so dass der Verformungsabschnitt, insbesondere die Verformungsfläche, verformt wird und der zweite Montagezustand erreicht ist. Der Kopf ist vorzugsweise in radialer Richtung zur Längserstreckung des Befestigungsmittels breiter als der Endbereich ausgebildet, beispielsweise ist der Kopf als ein Sechskantkopf oder ein Zylinderkopf realisiert. Der Endbereich des Befestigungsmittels ist bevorzugt mit einem Gewinde versehen, sodass dieses in die Welle oder in ein mit der Welle fest verbundene Komponente eingeschraubt werden kann bzw. ist.

Insbesondere umfasst der Klemmverband mindestens die Welle und das Abtriebsrad als Klemmverbundpartner. Optional ergänzend umfasst der Klemmverband die Anschlagscheibe und/oder ein weiteres Bauteil der Verstellgetriebeanordnung als Klemmverbundpartner.

Im Rahmen der Erfindung wird vorgeschlagen, dass ein Klemmverbundpartner einen Verformungsabschnitt aufweist, wobei der Verformungsabschnitt eine Kontaktfläche und eine Verformungsfläche aufweist. Der Verformungsabschnitt dient dazu einen Reibradius und/oder einen Druckmittelpunkt zu definieren, wobei der Reibradius und/oder Druckmittelpunkt insbesondere durch die Kontaktfläche definiert wird. Insbesondere weist das Abtriebsrad und/oder die Welle und/oder die Anschlagscheibe den Verformungsabschnitt auf.

In einem ersten Montagezustand kontaktiert der Verformungsabschnitt einen anderen der Klemmverbundpartner mit der Kontaktfläche und zugleich bildet die Verformungsfläche einen freien Verformungsbereich zu dem Klemmverbundpartner, wobei die Kontaktfläche radial außen zu dem Verformungsbereich angeordnet ist. Die Verformungsfläche schließt sich radial in Richtung der Hauptdrehachse unmittelbar an die Kontaktfläche an. Vorzugsweise ist der Verformungsabschnitt durch die Verformungsfläche und die Kontaktfläche gebildet. Insbesondere ist der freie Verformungsbereich ein Luftspalt, welcher in axialer Richtung durch die Verformungsfläche und den Klemmverbundpartner und in radialer Richtung durch die Kontaktfläche begrenzt ist.

Im Speziellen ist die Kontaktfläche eine Kreisringfläche. Insbesondere weist die Kreisringfläche eine Kreisringbreite von weniger als 2 mm, vorzugsweise weniger als 1, im Speziellen weniger als 0,1 mm auf. In dem ersten Montagezustand liegt die Kontaktfläche insbesondere formschlüssig und/oder kraftschlüssig in axialer Richtung in Bezug auf die Hauptdrehachse an dem Klemmverbundpartner, vorzugsweise an der Anlagefläche, an. Vorzugsweise liegt die Kontaktfläche vollständig in Umlaufrichtung an der Anlagefläche an.

Insbesondere werden mindestens zwei Klemmverbundpartner miteinander verbunden, so dass der Klemmverbund gebildet ist. Prinzipiell können beide Klemmverbundpartner den Verformungsabschnitt aufweisen. Besonders bevorzugt jedoch weist nur einer der beiden Klemmverbundpartner den Verformungsabschnitt auf. Insbesondere weist einer der Klemmverbundpartner mindestens eine Anlagefläche auf. Vorzugsweise erstreckt sich die Anlagefläche in einer Radialebene zur Hauptdrehachse. In dem ersten Montagezustand liegt die Kontaktfläche vorzugsweise an der Anlagefläche an.

In einem zweiten Montagezustand liegen die Kontaktfläche und die Verformungsfläche an dem anderen Klemmverbundpartner flächig an. Insbesondere liegt der Verformungsabschnitt, vorzugsweise die Kontaktfläche und die Verformungsfläche, in axialer Richtung und/oder in Umlaufrichtung formschlüssig und/oder kraftschlüssig an dem Klemmverbundpartner, vorzugsweise, der Anlagefläche an. Prinzipiell ist in dem zweiten Montagezustand der Verformungsbereich kleiner als in dem ersten Montagezustand. Besonders bevorzugt jedoch ist der Verformungsbereich nicht mehr vorhanden, so dass der Luftspalt geschlossen ist.

Alternativ oder optional ergänzend liegen der Verformungsabschnitt, insbesondere die Verformungsfläche und/oder die Kontaktfläche in dem zweiten Montagezustand in radialer Richtung in Bezug auf die Hauptdrehachse vollständig oder teilweise an der Anlagefläche an. Insbesondere erstreckt sich der Verformungsabschnitt in radialer Richtung in Bezug auf die Hauptdrehachse über mehr als 50%, vorzugsweise mehr als 80%, im Speziellen mehr als 90% der radialen Erstreckung der Anlagefläche. Besonders bevorzugt erstreckt sich die Verformungsfläche in dem zweiten Montagezustand in einer Radialebene zur Hauptdrehachse.

Der Vorteil der Erfindung besteht darin dass durch die erfindungsgemäße Ausgestaltung des Verformungsabschnittes der Reibradius beim Anziehen des Schraubmittels nahezu konstant bleibt. Ferner kann je nach Ausgestaltung des Verformungsabschnittes bzw. je nach Anordnung der Kontaktfläche ein maximaler Reibradius eingestellt werden. Ein weiterer Vorteil besteht darin, dass durch den erfindungsgemäßen Verformungsabschnitt ein höheres Reibmoment erzeugt wird. Somit wird ein Durchrutschen der einzelnen Komponenten der Wellgetriebeeinrichtung reduziert und die Betriebssicherheit erhöht. Ferner ist durch die einfache Ausgestaltung eine kostengünstige Herstellung des Verformungsabschnitts möglich.

Bei einer bevorzugten Weiterbildung der Erfindung verläuft der freie Verformungsbereich, in einem Längsschnitt entlang der Hauptdrehachse betrachtet, radial in Bezug auf die Hauptdrehachse in Richtung der Kontaktfläche konvergierend. Insbesondere schließt die Kontaktfläche den Verformungsbereich in radialer Richtung nach außen hin ab. Vorzugsweise weist der Verformungsbereich in Umlaufrichtung gleichbleibend den gleichen oder einen ähnlichen Längsschnitt auf. Insbesondere verläuft der freie Verformungsbereich in radialer Richtung gekrümmt oder gerade konvergierend.

In einer bevorzugten Realisierung der Erfindung ist in dem ersten Montagezustand der Verformungsabschnitt, insbesondere die Verformungsfläche, konkav oder konisch. Durch die konkave oder konische Gestaltung des Verformungsabschnitts legen sich beim Anziehen des Befestigungsmittels bei einer Montage der Wellgetriebeeinrichtung zuerst die Kontaktfläche und anschließend die Verformungsfläche an den Klemmverbundpartner an. Insbesondere sind die Verformungsfläche und/oder die Kontaktfläche konkav oder konisch ausgebildet. Vorzugsweise ist die Verformungsfläche und/oder die Kontaktfläche eine Rotationsfläche, welche durch eine um die Hauptdrehachse rotierende Kurve und/oder Schräge gebildet ist. Beispielsweise ist die Verformungsfläche eine nach innen gerichtete Kegelringfläche. Besonders bevorzugt wird der Verformungsabschnitt durch Drehen, im Speziellen Hartdrehen, und/oder durch Umformen gebildet.

Insbesondere ist der Verformungsabschnitt, vorzugsweise die Verformungsfläche und/oder die Kontaktfläche in dem zweiten Montagezustand geradegebogen. Alternativ oder optional ergänzend bildet der Verformungsabschnitt in dem zweiten Montagezustand einen Konturpartner zu der Anlagefläche, so dass der Verformungsabschnitt vollständig an dem Klemmverbundpartner anliegt.

In einer bevorzugten Umsetzung ist die Wellgetriebeeinrichtung als ein VCT-System oder als ein VCR-System und/oder als eine elektrische Wellenverstelleinrichtung ausgebildet ist. Insbesondere dient das VCT-System zur Steuerung von Ein- und/oder Auslassventilen eines Verbrennungsmotors des Fahrzeugs. Vorzugsweise dient das VCT-System dazu, die Phasenlage der Nockenwelle relativ zu der Phasenlage einer Kurbelwelle des Fahrzeugs zu verstellen. Insbesondere dient das VCR-System zur Änderung des Verdichtungsverhältnisses einer Hubkolbenmaschine.Insbesondere ist die elektrische Wellgetriebeeinrichtung zur Verstellung der Nockenwelle und/oder der Kurbelwelle ausgebildet. Besonders bevorzugt ist die Wellgetriebeeinrichtung ein elektrischer Nockenwellenversteller oder ein elektrischer Kompressionssteller.

Insbesondere wird in einem ersten Montageschritt die Kontaktfläche in Anlage mit dem Klemmverbundpartner gebracht, so dass die Verformungsfläche den freien Verformungsbereich zu dem Klemmverbundpartner bildet und der erste Montagezustand gebildet wird. Vorzugsweise wird in einem zweiten Montageschritt das Befestigungsmittel axial in Richtung der Welle eingeschraubt, wobei sich der Verformungsabschnitt verformt, so dass die Verformungsfläche an dem Klemmverbundpartner flächig anliegt und der zweite Montagezustand gebildet wird.

In einer konkreten Umsetzung weist das Abtriebsrad einen Innenverzahnungsabschnitt und einen Aufnahmeabschnitt zur Aufnahme der Welle oder ggf. zur Aufnahme der Anschlagscheibe auf. Der Innenverzahnungsabschnitt weist insbesondere die Innenverzahnung auf, wobei das Abtriebsrad als das Abtriebshohlrad ausgebildet ist. Der Aufnahmeabschnitt ist vorzugsweise ein rotationssymmetrischer Ansatz, wobei der Aufnahmeabschnitt besonders bevorzugt eine zylindrische Form, z.B. Hohlzylinder, aufweist. Besonders bevorzugt begrenzt der Aufnahmeabschnitt den Verformungsbereich radial in Richtung der Hauptachse. Ferner ist der Aufnahmeabschnitt zur Aufnahme des Befestigungsmittels ausgebildet. Insbesondere ist das Befestigungsmittel koaxial durch den Aufnahmeabschnitt geführt. Beispielsweise ist eine Zylindermantelfläche des Aufnahmeabschnitts zur Aufnahme der Welle oder alternativ zur Aufnahme der Anschlagscheibe ausgebildet. Optional ergänzend ist eine axiale Bohrung des Aufnahmeabschnitts zur Aufnahme des Befestigungsmittels ausgebildet. Der Innenverzahnungsabschnitt und/oder der Aufnahmeabschnitt verlaufen in axialer Richtung parallel zu der Hauptdrehachse.

Die beiden Abschnitte sind radial in Bezug auf die Hauptdrehachse zueinander versetzt, wobei sich der Verformungsabschnitt zwischen dem Innenverzahnungsabschnitt und dem Aufnahmeabschnitt angeordnet ist. Insbesondere weist das Abtriebsrad in einem Längsschnitt betrachtet eine Z-Form auf. Vorzugsweise sind die beiden horizontalen Schenkel durch den Innenverzahnungsabschnitt und den Aufnahmeabschnitt und der vertikal oder schräg verlaufende Schenkel, welcher die beiden horizontalen Schenkel verbindet, durch den Verformungsabschnitt gebildet. Besonders bevorzugt sind die Abschnitte unmittelbar miteinander verbunden, so dass das Abtriebsrad gebildet ist. Beispielsweise ist das Abtriebsrad einteilig, z.B. aus einem Guss, geschmiedet oder pulvermetallurgisch, gefertigt. Besonders bevorzugt ist der Klemmverbundpartner zu dem Abtriebsrad die Welle oder alternativ die Anschlagscheibe.

In einer alternativen oder optional ergänzenden Ausgestaltung der Erfindung ist der Verformungsabschnitt an mindestens einer Wellenstirnfläche der Welle angeordnet. Insbesondere verläuft der Verformungsabschnitt in radialer Richtung in Bezug auf die Hauptdrehachse vollständig über die gesamte Wellenstirnfläche. Alternativ erstreckt sich der Verformungsabschnitt in radialer Richtung teilweise über die gesamte Wellenstirnfläche. Besonders bevorzugt ist der Klemmverbundpartner zu der Welle das Abtriebsrad oder alternativ die Anschlagscheibe.

In einer bevorzugten Konkretisierung weist die Wellgetriebeeinrichtung die Anschlagscheibe auf, wobei die Anschlagscheibe zwischen dem Abtriebsrad und der Welle angeordnet ist. Insbesondere ist die Anschlagscheibe als der Klemmverbundpartner für das Abtriebsrad und/oder die Welle ausgebildet.

In einer weiteren konkreten Umsetzung der Erfindung weist die Anschlagscheibe eine erste und eine zweite Anschlagscheibenstirnfläche auf, wobei ein weiterer Verformungsabschnitt an der ersten und/oder zweiten Anschlagscheibenstirnfläche angeordnet ist. Insbesondere verläuft der weitere Verformungsabschnitt in radialer Richtung in Bezug auf die Hauptdrehachse vollständig über die gesamte erste und/oder zweite Anschlagscheibenstirnfläche. Alternativ erstreckt sich der weitere Verformungsabschnitt in radialer Richtung teilweise über erste und/oder die zweite Anschlagscheibenstirnfläche. Besonders bevorzugt ist der Klemmverbundpartner zu der Anschlagscheibe die Welle und/oder das Abtriebsrad.

In einer konkreten Realisierung beträgt der freie Verformungsbereich in axialer Richtung in Bezug auf die Hauptdrehachse nicht mehr als 0,1 mm. Insbesondere wird die Verformungsfläche während der Montage der Verstellgetriebeanordnung um 0,1 mm kontrolliert elastisch gerade gebogen.

Ein weiterer Gegenstand der Erfindung bildet ein Verfahren zur Montage der Verstellgetriebeanordnung wie diese zuvor beschrieben wurde beziehungsweise nach einem der vorhergehenden Ansprüche.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine schematische Längsschnittdarstellung einer Verstellgetriebeanordnung in einem ersten Montagezustand als ein Ausführungsbeispiel der Erfindung;
- Figur 2: die Verstellgetriebeanordnung in gleicher Darstellung wie in Figur 1 in einem zweiten Montagezustand;
- Figur 3: eine schematische Längsschnittdarstellung eines Ausschnitts der Wellgetriebeeinrichtung.

Einander entsprechende oder gleiche Teile sind in den Figuren jeweils mit den gleichen Bezugszeichen versehen.

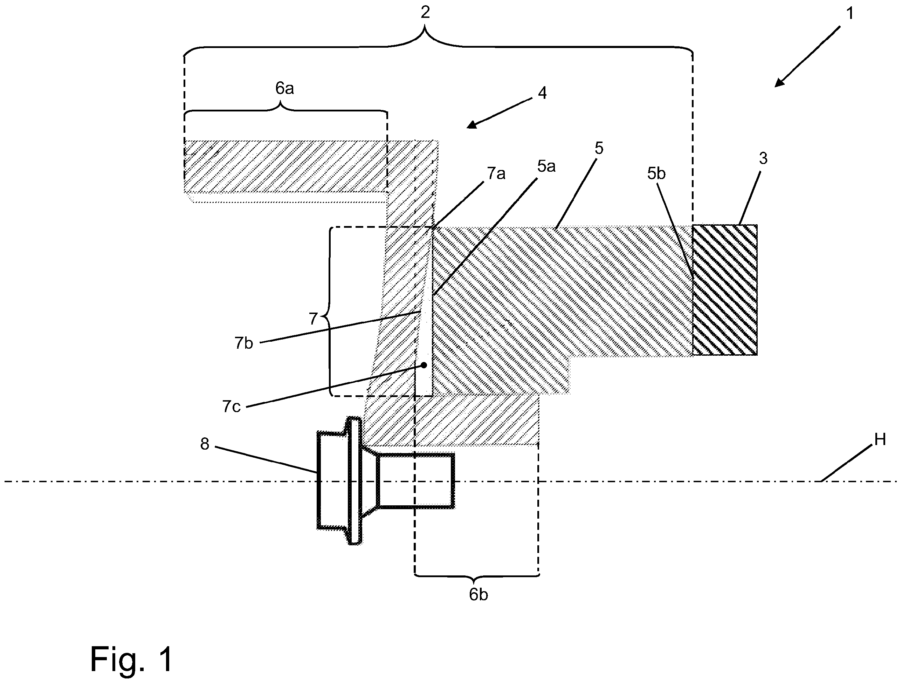

Figur 1 zeigt einen Längsschnitt entlang einer Hauptdrehachse H durch eine Verstellgetriebeanordnung 1 in einem ersten Montagezustand. Die Verstellgetriebeanordnung 1 weist eine Wellgetriebeeinrichtung 2 sowie eine nur schematisch angedeutete Welle 3 auf. Die Wellgetriebeeinrichtung 2 ist zur Verstellung der Welle 3 ausgebildet und/oder geeignet. Beispielsweise ist die Wellgetriebeeinrichtung 2 ein elektrischer Wellenversteller zur Verstellung eines Phasenwinkels der Welle 3. Die Wellgetriebeeinrichtung 2 ist drehfest mit der Welle 3 verbunden, so dass eine Drehbewegung der Wellgetriebeeinrichtung 2 auf die Welle 3 übertragen wird. Zum Beispiel ist die Wellgetriebeeinrichtung 2 getriebetechnisch seriell zwischen einer Kurbelwelle und der Welle 3 angeordnet.

Die Wellgetriebeeinrichtung 2 weist ein Abtriebsrad 4 und eine Anschlagscheibe 5 auf. Die Anschlagschiebe 5 ist koaxial und/oder konzentrisch zu dem Abtriebsrad 4 angeordnet. Das Abtriebsrad 4 und die Anschlagscheibe 5 bilden einen Abtrieb, wobei die Welle 3 drehfest mit der Anschlagscheibe 5 gekoppelt ist. Beispielsweise können die Anschlagscheibe 5 und die Welle 3 auch einteilig ausgebildet sein bzw. weist die Welle 3 einen integrierten Anschlagabschnitt auf. Die Welle 3 ist koaxial zu der Anschlagscheibe 5 und/oder zu dem Abtriebsrad 4 angeordnet.

Beispielsweise ist das Abtriebsrad 4 als ein Abtriebshohlrad ausgebildet. Das Abtriebsrad 4 weist einen Innenverzahnungsabschnitt 6, einen Verformungsabschnitt 7 und einen Aufnahmeabschnitt 6b auf. Beispielsweise kämmt ein Flexring mit dem Innenverzahnungsabschnitt 6, so dass das Hohlrad in Rotation um die Hauptdrehachse H versetzt wird. Der Aufnahmeabschnitt 6b bildet eine Aufnahme für die Anschlagscheibe 5. Beispielsweise ist der Aufnahmeabschnitt 6b ein rotationssymmetrischer Ansatz, wobei der Aufnahmeabschnitt 6b und die Anschlagscheibe 5 einen Formschluss in radialer Richtung in Bezug auf die Hauptdrehachse H bilden. Beispielsweise ist das Abtriebsrad 4 einteilig z.B. aus einem Guss, geschmiedet, pulvermetallurgisch etc., gefertigt, wobei der Verformungsabschnitt 7 z.B. durch Hartdrehen gebildet wird.

Der Innenverzahnungsabschnitt 6 und der Aufnahmeabschnitt 6b erstrecken sich in axialer Richtung parallel zu der Hauptdrehachse H. Der Innenverzahnungsabschnitt 6 und der Aufnahmeabschnitt 6b sind in radialer Richtung zueinander versetzt, wobei der Verformungsabschnitt 7 sich zwischen dem Innenverzahnungsabschnitt 6 und dem Aufnahmeabschnitt 6b erstreckt und diese unmittelbar miteinander verbindet. In der gezeigten Schnittdarstellung weist das Abtriebsrad 4 eine Z-Form auf, wobei die beiden horizontalen Schenkel durch den Innenverzahnungsabschnitt 6 und den Aufnahmeabschnitt 6b gebildet sind und der schräg verlaufende verbindende Schenkel durch den Verformungsabschnitt 7 gebildet wird.

Der Verformungsabschnitt 7 weist eine Kontaktfläche 7a und eine Verformungsfläche 7b auf. Die Kontaktfläche 7a bzw. die Verformungsfläche 7b weisen eine konkave Form auf. Die Anschlagscheibe 5 weist eine erste und eine zweite Anschlagscheibenstirnfläche 5a, b auf. Die Kontaktfläche 7a liegt in axialer Richtung an der ersten Anschlagscheibenstirnfläche 5a an. Die Welle 3 liegt in axialer Richtung in Bezug auf die Hauptachse H an der zweiten Anschlagscheibenstirnfläche 5b an. Beispielsweise ist die Kontaktfläche 7a eine Kreisringfläche, wobei die Kontaktfläche 7a die erste Anschlagscheibenstirnfläche 5a in Umlaufrichtung kontaktiert. Die Verformungsfläche 7b erstreckt sich von der Kontaktfläche 7a in Richtung der Hauptdrehachse H und definiert einen freien Verformungsbereich 7c. Die Kontaktfläche 7a ist radial außen zu dem freien Verformungsbereich 7c angeordnet.

Der Verformungsbereich 7c ist beispielsweise ein Luftspalt in Umlaufrichtung in Bezug auf die Hauptdrehachse, welcher in axialer Richtung durch die Verformungsfläche 7b und die erste Anschlagscheibenstirnfläche 5a und in radialer Richtung durch die Kontaktfläche 7a und den Aufnahmeabschnitt 6b begrenzt ist. Der Verformungsbereich 7c verläuft radial in Bezug auf die Hauptdrehachse H in Richtung der Kontaktfläche 7a konvergierend.

Die Verbindung zwischen der Welle 3 und der Wellgetriebeeinrichtung 2 erfolgt über ein Befestigungsmittel 8, wobei das Befestigungsmittel 8 insbesondere einen Kopf und einen Endbereich aufweist. Der Endbereich ist mit einem Gewinde versehen, sodass die Befestigungsmittel 8 in die Welle 3 koaxial eingeschraubt werden kann. Insbesondere ist das Befestigungsmittel 8 als eine Zentralschraube z.B. eine Sechskantschraube ausgebildet.

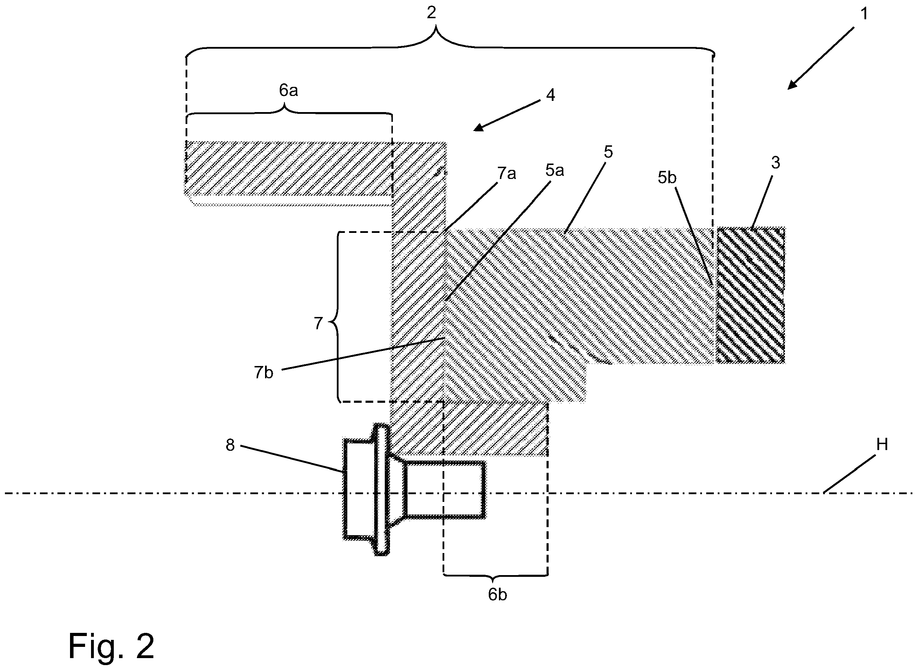

Figur 2 zeigt in gleicher Darstellung wie Figur 1 die Verstellgetriebeanordnung 1 in einem zweiten Montagezustand. Hierzu wird das Befestigungsmittel 8 in axialer Richtung in Bezug auf die Hauptdrehachse H in die Welle 3 eingeschraubt. Dabei wird die Verformungsfläche 7b geradegebogen, so dass sich der freie Verformungsbereich 7c weiter verkleinert bis die Verformungsfläche 7b flächig an der ersten Anschlagscheibenstirnfläche 5a anliegt. Durch die konkave Form der Verformungsfläche 7b wird sichergestellt, dass beim Anziehen des Befestigungsmittels 8 der Reibradius, insbesondere ein Bereich mit einer hohen Flächenpressung, in dem zweiten Montagezustand radial weit außen, insbesondere im Bereich der Kontaktfläche 7a, bleibt.

In dem zweiten Montagezustand bildet das Abtriebsrad 4, die Anschlagscheibe 5 und die Welle 3 einen Klemmverband, wobei der Klemmverband derart ausgebildet ist, dass die das Abtriebsrad 4, die Anschlagscheibe 5 und die Welle 3 kraftschlüssig miteinander verbunden sind. Beispielsweise bildet der Verformungsabschnitt 7, insbesondere die Kontaktfläche 7a und die Verformungsfläche 7b zusammen mit der ersten Anschlagscheibenstirnfläche 5a in axialer Richtung in Bezug auf Hauptdrehachse H einen Formschluss.

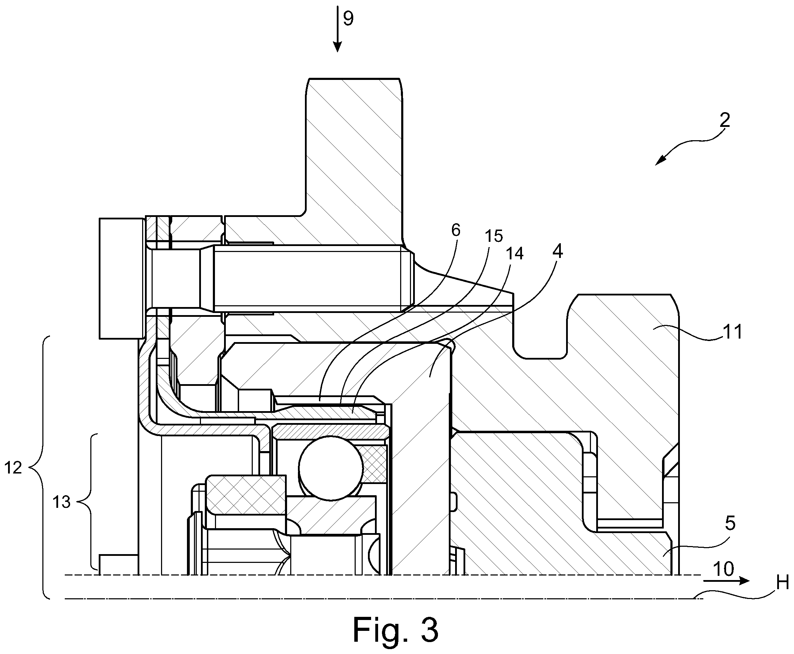

Figur 3 zeigt in einer schematischen Längsschnittdarstellung einen Ausschnitt der Verstellvorrichtung 1. Die Verstellvorrichtung 1 dient dazu, die Phasenlage einer Welle eines Verbrennungsmotors relativ zu der Phasenlage einer Kurbelwelle des Verbrennungsmotors zu verstellen.

Die Verstellvorrichtung 1 weist einen Antrieb 9 auf, welcher als ein Zahnradkörper 11 ausgebildet ist, sowie einen Abtrieb 10, welcher als eine Welle ausgebildet ist, die mit dem Abtriebsrad 4 drehfest gekoppelt ist. Der Antrieb 9 ist mit der Kurbelwelle getriebetechnisch verbunden, der Abtrieb 10 ist mit der Welle 3 getriebetechnisch verbunden oder wird durch die Welle 3 gebildet. Beispielsweise kann die Welle 3 koaxial zu dem Abtrieb 10 angeordnet sein.

Die Verstellvorrichtung 1 weist ein Wellgetriebe 12 auf, um eine Relativverdrehung zwischen Antrieb 9 und Abtrieb 10 zu erzeugen, um die Phasenlage zwischen der Kurbelwelle und der Welle zu ändern. Das Wellgetriebe 12 wird durch einen Wellgenerator 13, das Abtriebsrad 4 und eine Stirnradeinrichtung 14 gebildet ist. Das Wellgetriebe 13 wird auch als Harmonicdrive bezeichnet.

Der Wellgenerator 13 weist in axialer Draufsicht eine elliptische Form auf und kann durch einen nicht dargestellten Antrieb in Rotation versetzt werden. Die Stirnradeinrichtung 14 weist einen Außenverzahnungsabschnitt 15 auf und ist in diesem Bereich als eine elastische und/oder flexible Hülse ausgebildet. Der Wellgenerator 13 kontaktiert die Stirnradeinrichtung 14 an der radialen Innenseite.

Der Innenverzahnungsabschnitt 6 auf, welcher in zwei Eingriffsbereichen mit dem Außenverzahnungsabschnitt 15 in Eingriff steht. Die Anzahl der Zähne des Außenverzahnungsabschnitts 15 und des Innenverzahnungsabschnitts 6 sind unterschiedlich ausgebildet, sodass ein Ablaufen der Eingriffsbereiche in Umlaufrichtung um eine Hauptachse H der Verstellvorrichtung 2 zu einer Relativverdrehung zwischen Abtriebsrad 4 und Stirnradeinrichtung 14 führt.

### Bezugszeichenliste

- 1: Verstellgetriebeanordnung
- 2: Wellgetriebeeinrichtung
- 3: Welle
- 4: Antriebsrad
- 5: Anschlagscheibe
- 5a: erste Anschlagscheibenstirnfläche
- 5b: zweite Anschlagscheibenstirnfläche
- 6a: Innenverzahnungsabschnitt
- 6b: Aufnahmeabschnitt
- 7: Verformungsabschnitt
- 7a: Kontaktfläche
- 7b: Verformungsfläche
- 7c: Verformungsbereich
- 8: Befestigungsmittel
- 9: Antrieb
- 10: Abtrieb
- 11: Zahnradkörper
- 12: Wellgetriebe
- 13: Wellgenerator
- 14: Stirnradeinrichtung
- 15: Außenverzahnungsabschnitt

## Patentansprüche

1. Verstellgetriebeanordnung (1) für ein Fahrzeug,
mit einer Welle (3),
mit einem Nockenwellenversteller als einer Wellgetriebeeinrichtung (2) zur Verstellung der Welle (3), wobei die Wellgetriebeeinrichtung (2) ein Abtriebsrad (4) aufweist, wobei das Abtriebsrad (4) eine Hauptdrehachse (H) definiert,
mit einem Befestigungsmittel (8), wobei die Welle (3) durch das Befestigungsmittel (8) mit dem Abtriebsrad (4) verbunden ist, wobei das Befestigungsmittel (8) die Welle (3) und das Abtriebsrad (4) in axialer Richtung zusammenpresst, sodass ein Klemmverband gebildet ist, wobei der Klemmverband mindestens die Welle (3) und das Abtriebsrad (4) als Klemmverbundpartner umfassen,
**dadurch gekennzeichnet, dass**
das Abtriebsrad (4) einen Verformungsabschnitt (7) aufweist, wobei der Verformungsabschnitt (7) eine Kontaktfläche (7a) und eine Verformungsfläche (7b) aufweist, wobei in einem ersten Montagezustand der Verformungsabschnitt (7) einen anderen der Klemmverbundpartner mit der Kontaktfläche (7a) kontaktiert und zugleich die Verformungsfläche (7b) einen freien Verformungsbereich (7c) zu dem Klemmverbundpartner bildet, wobei die Kontaktfläche (7a) radial außen zu dem Verformungsbereich (7c) angeordnet ist, und wobei in einem zweiten Montagezustand die Kontaktfläche (7a) und die Verformungsfläche (7b) an dem anderen Klemmverbundpartner flächig anliegen.

2. Verstellgetriebeanordnung (1) nach Anspruch 1, **dadurch gekennzeichnet, dass** in dem ersten Montagezustand der freie Verformungsbereich (7c), in einem Längsschnitt entlang der Hauptdrehachse (H) betrachtet, radial in Bezug auf die Hauptdrehachse (H) in Richtung der Kontaktfläche (7a) konvergierend verläuft.

3. Verstellgetriebeanordnung (1) nach Anspruch 1 oder 2, **dadurch gekennzeichnet, dass** in dem ersten Montagezustand der Verformungsabschnitt (7) konkav oder konisch ausgebildet ist.

4. Verstellgetriebeanordnung (1) nach einem der vorhergehenden Ansprüche, **dadurch gekennzeichnet, dass** das Abtriebsrad (4) einen Aufnahmeabschnitt (6b) und einen Innenverzahnungsabschnitt (6a) aufweist, wobei die beiden Abschnitte (6a, b) axial zueinander versetzt sind, wobei sich der Verformungsabschnitt (7) zwischen dem Innenverzahnungsabschnitt (6a) und dem Aufnahmeabschnitt (6b) erstreckt.

5. Verstellgetriebeanordnung (1) nach einem der vorhergehenden Ansprüche, **dadurch gekennzeichnet, dass** die Welle (3) mindestens eine Wellenstirnfläche aufweist, wobei der Verformungsabschnitt (7) an der Wellenstirnfläche angeordnet ist.

6. Verstellgetriebeanordnung (1) nach einem der vorhergehenden Ansprüche, **dadurch gekennzeichnet, dass** die Wellgetriebeeinrichtung (2) eine Anschlagscheibe (5) aufweist, wobei die Anschlagscheibe (5) als Klemmverbundpartner des Klemmverbands zwischen dem Abtriebsrad (4) und der Welle (3) angeordnet ist.

7. Verstellgetriebeanordnung (1) nach Anspruch 6, **dadurch gekennzeichnet, dass** die Anschlagscheibe (5) eine erste und eine zweite Anschlagscheibenstirnfläche (5a, b) aufweist, wobei ein weiterer Verformungsabschnitt an der ersten und/oder zweiten Anschlagscheibenstirnfläche (5a, b) angeordnet ist.

8. Verstellgetriebeanordnung (1) nach einem der vorhergehenden Ansprüche, **dadurch gekennzeichnet, dass** der freie Verformungsbereich (7c) in axialer Richtung in Bezug auf die Hauptdrehachse (H) nicht mehr als 0,1 mm beträgt.

9. Verfahren zur Montage einer Verstellgetriebeanordnung (1) nach einem der vorhergehenden Ansprüche, bei dem
- die Kontaktfläche (7a) in Anlage mit dem Klemmverbundpartner gebracht wird, so dass die Verformungsfläche (7b) den freien Verformungsbereich (7c) zu dem Klemmverbundpartner bildet und der erste Montagezustand gebildet wird,
- das Befestigungsmittel (8) axial in Richtung der Welle (3) eingeschraubt wird, wobei sich der Verformungsabschnitt (7) verformt, so dass die Verformungsfläche (7b) an dem Klemmverbundpartner flächig anliegt und der zweite Montagezustand gebildet wird.

## Claims

1. A variable-speed gear arrangement (1) for a vehicle,
having a shaft (3),
having a camshaft adjuster as a harmonic drive device (2) for adjusting the shaft (3), wherein the harmonic drive device (2) has an output gear (4), wherein the output gear (4) defines a main axis of rotation (H),
having a fastening means (8), wherein the shaft (3) is connected to the output gear (4) by the fastening means (8), wherein the fastening means (8) presses the shaft (3) and the output gear (4) together in the axial direction so that a clamping connection is formed, wherein the clamping connection comprises at least the shaft (3) and the output gear (4) as clamping connection partners,
**characterized in that**
the output gear (4) has a deformation portion (7), wherein the deformation portion (7) has a contact surface (7a) and a deformation surface (7b), wherein, in a first assembly state the deformation portion (7), contacts another of the clamping connection partners with the contact surface (7a) and, at the same time, the deformation surface (7b) forms a free deformation area (7c) to the clamping composite partner, wherein the contact surface (7a) is arranged radially outside the deformation area (7c), and wherein in a second assembly state the contact surface (7a) and the deformation surface (7b) abut flatly against the other clamping connection partner.

2. The variable-speed gear arrangement (1) according to claim 1, **characterized in that** in the first assembly state the free deformation area (7c), viewed in a longitudinal section along the main axis of rotation (H), extends in a radially converging manner with respect to the main axis of rotation (H) in the direction of the contact surface (7a).

3. The variable-speed gear arrangement (1) according to claim 1 or 2, **characterized in that** in the first assembly state the deformation portion (7) is formed to be concave or conical.

4. The variable-speed gear arrangement (1) according to any one of the preceding claims, **characterized in that** the output gear (4) has a receiving portion (6b) and an internal toothing portion (6a), wherein the two portions (6a, b) are axially offset from one another, wherein the deformation portion (7) extends between the internal toothing portion (6a) and the receiving portion (6b).

5. The variable-speed gear arrangement (1) according to any one of the preceding claims, **characterized in that** the shaft (3) has at least one shaft end face, wherein the deformation portion (7) is arranged on the shaft end face.

6. The variable-speed gear arrangement (1) according to any one of the preceding claims, **characterized in that** the harmonic drive device (2) has a washer disc (5), wherein the washer disc (5) is arranged as a clamping connection partner of the clamping connection between the output gear (4) and the shaft (3).

7. The variable-speed gear arrangement (1) according to claim 6, **characterized in that** the washer disc (5) has a first and a second stop washer disc end face (5a, b), wherein a further deformation portion is arranged on the first and/or second washer disc end face (5a, b).

8. The variable-speed gear arrangement (1) according to any one of the preceding claims, **characterized in that** the free deformation area (7c) is not more than 0.1 mm in the axial direction in relation to the main axis of rotation (H).

9. A method for assembling a variable-speed gear arrangement (1) according to any one of the preceding claims, in which
- the contact surface (7a) is brought into contact with the clamping connection partner so that the deformation surface (7b) forms the free deformation area (7c) to the clamping connection partner and the first assembly state is formed,
- the fastening means (8) is screwed axially in the direction of the shaft (3), wherein the deformation portion (7) is deformed so that the deformation surface (7b) abuts flat against the clamping connection partner and the second assembly state is formed.

## Revendications

1. Ensemble mécanisme de réglage (1) pour un véhicule,
comprenant un arbre (3),
comprenant un dispositif de réglage d'arbre à cames comme dispositif réducteur à planétaire (2) pour régler l'arbre (3), dans lequel le dispositif réducteur à planétaire (2) comporte un pignon mené (4), dans lequel le pignon mené (4) définisse un axe principal de rotation (H),
comprenant un moyen de fixation (8), dans lequel l'arbre (3) est raccordé, à l'aide du moyen de fixation (8), au pignon mené (4), dans lequel le moyen de fixation (8) presse ensemble l'arbre (3) et le pignon mené (4) dans la direction axiale de telle sorte qu'une liaison par serrage est formée, dans lequel la liaison par serrage comprend au moins l'arbre (3) et le pignon mené (4) comme partenaires de liaison par serrage,
**caractérisé en ce que**
le pignon mené (4) comporte une section de déformation (7), dans lequel la section de déformation (7) comporte une surface de contact (7a) et une surface de déformation (7b), dans lequel, dans un premier état d'assemblage, la section de déformation (7) entre en contact, à l'aide de la surface de contact (7a), avec un autre des partenaires de liaison par serrage et la surface de déformation (7b) forme simultanément une zone de déformation (7c) libre par rapport au partenaire de liaison par serrage, dans lequel la surface de contact (7a) est disposée radialement à l'extérieur de la zone de déformation (7c), dans lequel, dans un second état d'assemblage, la surface de contact (7a) et la surface de déformation (7b) reposent à plat sur l'autre partenaire de liaison par serrage.

2. Ensemble mécanisme de réglage (1) selon la revendication 1, **caractérisé en ce que**, dans le premier état d'assemblage, la zone de déformation (7c) libre, vue en coupe longitudinale le long de l'axe principal de rotation (H), s'étend de manière convergente radialement par rapport à l'axe principal de rotation (H) dans la direction de la surface de contact (7a).

3. Ensemble mécanisme de réglage (1) selon la revendication 1 ou 2, **caractérisé en ce que** dans le premier état d'assemblage, la section de déformation (7) est concave ou conique.

4. Ensemble mécanisme de réglage (1) selon l'une quelconque des revendications précédentes, **caractérisé en ce que** le pignon mené (4) comporte une section de réception (6b) et une section de denture interne (6a), dans lequel les deux sections (6a, b) sont axialement décalées l'une de l'autre, dans lequel la section de déformation (7) s'étendant entre la section de denture interne (6a) et la section de réception (6b).

5. Ensemble mécanisme de réglage (1) selon l'une quelconque des revendications précédentes, **caractérisé en ce que** l'arbre (3) comporte au moins une face frontale d'arbre, dans lequel la section de déformation (7) est disposée sur la face frontale d'arbre.

6. Ensemble mécanisme de réglage (1) selon l'une quelconque des revendications précédentes, **caractérisé en ce que** le dispositif réducteur à planétaire (2) comporte un disque de butée (5), dans lequel le disque de butée (5) est disposé comme un partenaire de liaison par serrage de la liaison par serrage entre le pignon mené (4) et l'arbre (3).

7. Ensemble mécanisme de réglage (1) selon la revendication 6, **caractérisé en ce que** le disque de butée (5) comporte une première et une seconde face frontale de disque de butée (5a, b), dans lequel une autre section de déformation est disposée sur la première et/ou sur la seconde face frontale de disque de butée (5a, b).

8. Ensemble mécanisme de réglage (1) selon l'une quelconque des revendications précédentes, **caractérisé en ce que** la zone de déformation (7c) libre dans la direction axiale par rapport à l'axe principal de rotation (H) est inférieure ou égale à 0,1 mm.

9. Procédé d'assemblage d'un ensemble mécanisme de réglage (1) selon l'une quelconque des revendications précédentes, selon lequel
- la surface de contact (7a) est mise en contact avec le partenaire de liaison par serrage de telles sorte que la surface de déformation (7b) forme la zone de déformation (7c) libre par rapport au partenaire de liaison par serrage et le premier état d'assemblage est formé,
- le moyen de fixation (8) est vissé axialement dans la direction de l'arbre (3), dans lequel la section de déformation (7) est déformée de telle sorte que la surface de déformation (7b) repose à plat sur le partenaire de liaison par serrage et forme le second état d'assemblage.
